# FASCICULE DE BREVET EUROPEEN

(11) **EP 2 928 705 B1**
(45) Date de publication et mention de la délivrance du brevet: **22.02.2017**
(21) Numéro de dépôt: 13798677.4
(22) Date de dépôt: 02.12.2013
(51) Int. Cl.: B60C 11/00, B60C 1/00

(54) **PNEUMATIQUE COMPORTANT UNE BANDE DE ROULEMENT CONSTITUEE DE PLUSIEURS MELANGES ELASTOMERIQUES**
REIFEN MIT EINER LAUFFLÄCHE AUS MEHREREN ELASTOMERVERBINDUNGEN
TYRE COMPRISING A TREAD MADE UP OF SEVERAL ELASTOMERIC COMPOUNDS

(30) Priorité: 10.12.2012 FR 1261828
(43) Date de publication de la demande: 14.10.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: NAVARRO-LOSADA, Claudia, F-63040 Clermont-Ferrand Cedex 9 (FR); QUANTINET, Benjamin, F-63040 Clermont-Ferrand Cedex 9 (FR); GODEAU, Gilles, F-63040 Clermont-Ferrand Cedex 9 (FR); TREGOUET, Pierre, F-63040 Clermont-Ferrand Cedex 9 (FR)
(74) Mandataire: Le Cam, Stéphane Georges Elie
(86) Numéro de dépôt international: PCT/EP2013/075243
(87) Numéro de publication internationale: WO 2014/090619

(56) Documents cités:
- EP-A1- 2 522 530
- DE-A1-102011 001 133
- US-A- 5 046 542

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Radialement à l'extérieur de l'armature de sommet, on trouve la bande de roulement habituellement constituée de matériaux polymériques destinés à venir au contact du sol dans l'aire de contact entre le sol et le pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à» signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis l'axe de rotation du pneumatique est inférieure à, respectivement supérieure à ».

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités. Ce problème existe dans le cas de bords de deux couches d'éléments de renforcement, lesdites couches n'étant pas obligatoirement radialement adjacentes.

Pour limiter des élévations de température trop importantes au niveau du sommet du pneumatique, les matériaux constitutifs de la bande de roulement sont avantageusement choisis avec des pertes hystérétiques adaptées aux conditions de fonctionnement du pneumatique.

Par ailleurs, afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

La demande française WO 99/24269 propose encore, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

Cette amélioration de l'endurance des pneumatiques permet d'envisager au moins la possibilité d'un rechapage lorsque la bande de roulement est usée. En effet, lorsqu'il est souhaité faire un rechapage du pneumatique après usure de la bande de roulement, il faut être en mesure de rechaper un pneumatique dont le vieillissement n'est pas trop avancé afin d'optimiser l'utilisation de la nouvelle bande de roulement.

Afin d'augmenter encore la durée de vie des pneumatiques, il est usuelle de choisir des matériaux polymériques constitutifs de la bande de roulement présentant des propriétés de résistance en usure améliorées. De tels matériaux pénalisant le plus souvent les propriétés hystérétiques, il est encore connu de réaliser la bande de roulement d'un pneumatique par une superposition radiale de deux matériaux différents pour obtenir un compromis des propriétés d'usure et d'hystérèse satisfaisant pour les applications envisagées.

De tels pneumatiques sont par exemple décrits dans le document US 6,247,512. Ce document décrit la superposition de de deux couches de matériaux pour former la bande de roulement, le matériau externe venant au contact du sol étant notamment plus performant en termes d'usure alors que le matériau interne présente des propriétés hystérétiques permettant de limiter les montées en température du pneumatique dans la zone du sommet.

Il est encore connu de modifier la couche interne de telles bandes de roulement pour lutter contre les usures irrégulières de ladite bande de roulement apparaissant notamment après usure de la première couche formant la surface extérieure de la bande de roulement du pneumatique neuf. De telles couches internes de la bande de roulement peuvent ainsi comporter des parties axialement extérieures constituées de matériaux plus rigides. De tels pneumatiques sont par exemple décrits dans les demandes de brevet JP2007-196864 et JP 2009-286317.

Il s'avère toutefois que de telles bandes de roulement sont moins favorables aux propriétés hystérétiques du pneumatique et donc aux propriétés d'endurance et de résistance au roulement.

Le brevet EP 2 522 530, considéré comme l'état de la technique le plus proche, montre un pneumatique présentant toutes les caractéristiques du préambule de la revendication 1.

Les inventeurs se sont ainsi donnés pour mission d'être en mesure de fournir des pneumatiques autorisant une distance de roulage toujours plus importante avant d'envisager un rechapage, les propriétés d'endurance et de résistance au roulement étant conservées voire améliorées.

Ce but a été atteint selon l'invention par un pneumatique, à armature de carcasse radiale, comprenant une armature de sommet, elle-même coiffée radialement d'une bande de roulement réunie à deux bourrelets par l'intermédiaire de deux flancs, ladite bande de roulement étant constituée d'au moins deux couches de mélanges élastomériques radialement superposées, une première couche formant la partie radialement extérieure de la bande de roulement étant constituée d'un premier mélange élastomérique présentant un module G* supérieur à 1.8 MPa, une deuxième couche de mélanges élastomériques radialement intérieure et au contact de la dite première couche de mélange élastomérique étant constituée d'au moins trois parties, les parties axialement extérieures, de ladite deuxième couche, étant constituées d'un deuxième mélange élastomérique présentant une valeur maximale de tan(δ), noté tan(δ)max, strictement inférieure à 0.060, et au moins une partie, de ladite deuxième couche, axialement au contact d'au moins une partie axialement extérieure étant constituée d'un troisième mélange élastomérique présentant une valeur du module G* supérieure à 1.2 MPa et au moins 5 % inférieure à celle du premier mélange élastomérique et une valeur maximale de tan(δ), noté tan(δ)max, comprise entre 0.060 et 0.120.

Selon un mode de réalisation préféré de l'invention, la valeur maximale de tan(δ), noté tan(δ)max, du troisième mélange est inférieure à 0.100.

Le facteur de perte tan(δ) est une propriété dynamique de la couche de mélange caoutchouteux. Il est mesuré sur un viscoanalyseur (Metravib VA4000), selon la norme ASTM D 5992-96. On enregistre la réponse d'une éprouvette constituée de deux pastilles cylindriques de 2 mm d'épaisseur chacune et d'un centimètre de diamètre (l'éprouvette est réalisée à partir de prélèvements sur pneumatique réalisé à mi-hauteur de la couche concernée au plus près de la zone du plan équatorial dans une zone d'épaisseur suffisante pour constituer l'éprouvette), soumis à une sollicitation sinusoïdale en cisaillement simple alterné, à la fréquence de 10Hz, à une température de 60°C. On effectue un balayage en amplitude de déformation de 0,1 à 50% crête-crête (cycle aller), puis de 50% à 1% crête-crête (cycle retour). Les résultats exploités sont le module complexe de cisaillement dynamique (G*) et le facteur de perte tan(δ). Pour le cycle aller, on indique la valeur maximale de tan(δ) observée, noté tan(δ)ₘₐₓ.

La résistance au roulement est la résistance qui apparaît lorsque le pneumatique roule et révèle la montée en température dudit pneumatique. Elle est ainsi représentée par les pertes hystérétiques liées à la déformation du pneumatique durant une révolution. Les valeurs de tan(δ) des matériaux utilisés sont mesurées à 10Hz entre 30 et 100°C pour intégrer l'effet des différentes fréquences de déformation induites par la révolution du pneumatique. La valeur de tan(δ) à 60°C correspond ainsi à un indicateur de la résistance au roulement du pneumatique en roulage.

Les différentes mesures sont effectuées sur des pneumatiques neufs, n'ayant encore effectué aucun roulage.

Les inventeurs ont tout d'abord su mettre en évidence que la combinaison d'un premier mélange élastomérique présentant un module G* supérieur à 1.8 MPa, comme matériau de la bande de roulement venant au contact du sol et d'une deuxième couche radialement intérieure constituée de deux mélanges élastomériques tels que décrit précédemment conduit à un compromis satisfaisant entre les propriétés de résistance à l'usure et les propriétés d'endurance et de résistance au roulement du pneumatique.

En effet, le premier mélange élastomérique constituant la première couche de la bande de roulement présente une rigidité lui conférant des performances en usure satisfaisante.

Ladite au moins une partie, de ladite deuxième couche, axialement au contact d'au moins une partie axialement extérieure associe des propriétés de rigidité et d'hystérèse du troisième mélange élastomérique qui vont permettre d'une part, de contribuer aux performances en termes de résistance au roulement et d'autre part, d'assurer une protection satisfaisante de l'armature de renforcement du pneumatique après usure de la première couche et ainsi permettre un rechapage du pneumatique.

De tels mélanges élastomériques, correspondant au troisième mélange élastomérique, sont des mélanges élastomériques à base de caoutchouc naturel ou de polyisoprène synthétique à majorité d'enchaînements cis-1,4 et éventuellement d'au moins un autre élastomère diénique et d'une charge renforçante constituée :
(i) soit par une charge blanche de type silice et/ou alumine comportant des fonctions de surface SiOH et/ou AlOH choisie dans le groupe formé par les silices précipitées ou pyrogénées, les alumines ou les aluminosilicates, de surface spécifique comprise entre 120 et 180 m²/g employée à un taux supérieur ou égal à 40 pce et inférieur ou égal à 70 pce,
(ii) soit par un coupage de noir de carbone de surface spécifique CTAB comprise entre 65 et 105 m²/g, employé à un taux égal ou supérieur à 15 pce et inférieur ou égal à 28 pce et d'une charge blanche décrite en (i), dans lequel le taux global de charge est supérieur ou égal à 40 pce et inférieur ou égal à 70 pce et le taux en pce de charge blanche est supérieur ou égal au taux de noir de carbone en pce moins 5.

La mesure de surface spécifique CTAB est effectuée selon la norme NFT 45-007, novembre 1987, méthode B.

Dans le cas d'utilisation de charge claire ou charge blanche, il est nécessaire d'utiliser un agent de couplage et/ou de recouvrement choisi parmi les agents connus de l'homme de l'art. Comme exemples d'agents de couplage préférentiel, on peut citer les alcoxysilanes sulfurés du type polysulfure de bis-(3-trialcoxysilylpropyle), et parmi ceux-ci notamment le tétrasulfure de bis-(3-triéthoxysilylpropyle) commercialisé par la Société DEGUSSA sous les dénominations Si69 pour le produit liquide pur et X50S pour le produit solide (coupage 50/50 en poids avec du noir N330). Comme exemples d'agents de recouvrement on peut citer un alcool gras, un alkylalcoxysilane tel qu'un hexadécyltriméthoxy ou triéthoxysilane respectivement commercialisés par la Société DEGUSSA sous les dénominations Si116 et Si216, la diphénylguanidine, un polyéthylène glycol, une huile silicone éventuellement modifié au moyen des fonctions OH ou alcoxy. L'agent de recouvrement et/ou de couplage est utilisé dans un rapport pondéral par rapport à la charge ≥ à 1/100 et ≤ à 20/100, et préférentiellement compris entre 2/100 et 15/100 lorsque la charge claire représente la totalité de la charge renforçante et compris entre 1/100 et 20/100 lorsque la charge renforçante est constituée par un coupage de noir de carbone et de charge claire.

Comme autres exemples de charges renforçantes ayant la morphologie et les fonctions de surface SiOH et/ou AlOH des matières de type silice et/ou alumine précédemment décrites et pouvant être utilisées selon l'invention en remplacement partiel ou total de celles-ci, on peut citer les noirs de carbone modifiés soit au cours de la synthèse par addition à l'huile d'alimentation du four d'un composé du silicium et/ou d'aluminium soit après la synthèse en ajoutant, à une suspension aqueuse de noir de carbone dans une solution de silicate et/ou d'aluminate de sodium, un acide de façon à recouvrir au moins partiellement la surface du noir de carbone de fonctions SiOH et/ou AlOH. Comme exemples non limitatifs de ce type de charges carbonées avec en surface des fonctions SiOH et/ou AlOH, on peut citer les charges type CSDP décrites dans la Conférence N° 24 du Meeting ACS, Rubber Division, Anaheim, Californie, 6-9 mai 1997 ainsi que celles de la demande de brevet EP-A-0 799 854.

Lorsqu'une charge claire est utilisée comme seule charge renforçante, les propriétés d'hystérèse et de cohésion sont obtenues en utilisant une silice précipitée ou pyrogénée, ou bien une alumine précipitée ou bien encore un aluminosilicate de surface spécifique CTAB comprise entre 120 et 180 m²/g. Comme exemples non limitatifs de ce type de charge, on peut citer les silices KS404 de la Société Akzo, Ultrasil VN2 ou VN3 et BV3370GR de la Société Degussa, Zeopol 8745 de la Société Huber, Zeosil 175MP ou Zeosil 1165MP de la société Rhodia, HI-SIL 2000 de la Société PPG etc...

Parmi les élastomères diéniques pouvant être utilisés en coupage avec le caoutchouc naturel ou un polyisoprène synthétique à majorité d'enchaînements cis-1,4, on peut citer un polybutadiène (BR) de préférence à majorité d'enchaînements cis-1,4, un copolymère styrène-butadiène (SBR) solution ou émulsion, un copolymère butadiène-isoprène (BIR) ou bien encore un terpolymère styrène-butadiène-isoprène (SBIR). Ces élastomères peuvent être des élastomères modifiés en cours de polymérisation ou après polymérisation au moyen d'agents de ramification comme un divinylbenzène ou d'agents d'étoilage tels que des carbonates, des halogénoétains, des halogénosiliciums ou bien encore au moyen d'agents de fonctionnalisation conduisant à un greffage sur la chaîne ou en bout de chaîne de fonctions oxygénées carbonyle, carboxyle ou bien d'une fonction amine comme par exemple par action de la diméthyl ou de la diéthylamino benzophénone. Dans le cas de coupages de caoutchouc naturel ou de polyisoprène synthétique à majorité d'enchaînements cis-1,4 avec un ou plusieurs des élastomères diéniques, mentionnés ci-dessus, le caoutchouc naturel ou le polyisoprène synthétique est utilisé de préférence à un taux majoritaire et plus préférentiellement à un taux supérieur à 70 pce.

Le choix du deuxième mélange élastomérique qui constitue les parties axialement extérieures de la deuxième couche radialement intérieure de la bande de roulement permet d'améliorer sensiblement les performances en termes de résistance au roulement. Le choix de ce deuxième mélange élastomérique permettant d'obtenir les propriétés hystérétiques recherchées conduit usuellement à des propriétés en termes de cohésion peu favorables aux performances d'usure du pneumatique. Les parties axialement extérieures de la deuxième couche de la bande de roulement sont ainsi avantageusement définies de sorte qu'elles ne viennent pas au contact du sol tout au long de la vie du pneumatique.

Au sens de l'invention, la cohésion d'un mélange caoutchouteux est appréciée à partir des mesures de contrainte par établissement d'une courbe force/allongement en cassage.

Les contraintes à la rupture (en MPa) et les allongements à la rupture (en %) sont également mesurés. Les mesures de traction pour déterminer les propriétés de rupture sont effectuées à la température de 60°C ± 2°C, et dans les conditions normales d'hygrométrie (50 ± 5% d'humidité relative), selon la norme française NF T 40-101 (décembre 1979).

Par ailleurs, il s'avère que les mélanges élastomériques, correspondant au troisième mélange élastomérique, tels que décrits précédemment présentent des propriétés en matière de cuisson relativement faibles en ce sens qu'elles sont défavorables à une cuisson rapide du pneumatique. La présence des parties axialement extérieures de la deuxième couche étant dans la zone du pneumatique la plus froide lors de la cuisson et donc déterminantes soit en termes de température de cuisson soit en termes de temps de cuisson permet de pallier cette faiblesse du troisième mélange élastomérique. Un temps de cuisson plus rapide est notamment favorable à des propriétés hystérétiques globales du pneumatique améliorées en termes de résistance au roulement ; il est en effet connu que les propriétés hystérétiques des mélanges sont dégradées du fait de cuisson plus longue.

La réduction du temps de cuisson et/ou de la température de cuisson sont encore favorables au coût de revient industriel du pneumatique.

Les propriétés en matière de cuisson d'un mélange élastomérique sont usuellement déterminées à partir des propriétés rhéologiques du mélange.

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983) : tᵢ est le délai d'induction, c'est-à-dire le temps nécessaire au début de la réaction de vulcanisation ; t_{α} (par exemple t₉₅) est le temps nécessaire pour atteindre une conversion de α %, c'est-à-dire α% (par exemple 95%) de l'écart entre les couples minimum et maximum. On mesure également la constante de vitesse de conversion notée K (exprimée en min⁻¹), d'ordre 1, calculée entre 30% et 80% de conversion, qui permet d'apprécier la cinétique de vulcanisation.

Contrairement à l'une des solutions connues évoquées précédemment qui visait à lutter contre l'usure irrégulière de la bande de roulement par un choix d'assemblage de matériaux constitutifs de la bande de roulement, les inventeurs ont pris le parti de viser un compromis de performances faisant abstraction de l'irrégularité de l'usure de la bande de roulement, celle-ci pouvant notamment être palliée par des choix de sculpture de la bande de roulement connus de l'homme du métier.

Selon un mode de réalisation préférée de l'invention, les premier et troisième mélanges élastomériques ont une meilleure cohésion que le deuxième mélange. Cet avantage en cohésion se traduit par une valeur d'allongement à la rupture en cassage à 60°C supérieure d'au moins 15% par rapport à celle du deuxième mélange.

Selon ce mode de réalisation préféré de l'invention, les inventeurs ont su mettre en évidence, que les premier et troisième mélanges permettent de limiter la propagation des amorces de fissures qui peuvent apparaître dans la bande de roulement et notamment dans les fonds de sculptures où peuvent par exemple venir se coincer des cailloux.

Il est par ailleurs possible de prévoir de favoriser la performance hystérétique du pneumatique en augmentant le volume du troisième mélange au détriment de celui du premier mélange.

Une variante avantageuse de l'invention prévoit encore que ladite deuxième couche de mélange élastomérique est constituée d'au moins cinq parties, la partie centrale étant constituée d'un quatrième mélange élastomérique présentant une résistivité électrique volumique p telle que log(p) est inférieur à 6, les parties axialement extérieures, de ladite deuxième couche, étant constituées dudit deuxième mélange élastomérique, et au moins les parties intermédiaires, de ladite deuxième couche, axialement au contact de la partie centrale et des parties axialement extérieures étant constituées dudit troisième mélange.

La résistivité électrique volumique est mesurée en statique selon la norme ASTM D 257.

Le choix du quatrième mélange élastomérique constituant la partie centrale de la deuxième couche de la bande de roulement par ses propriétés de résistivité électrique permet d'assurer une évacuation des charges électrostatiques pouvant s'accumuler sur le véhicule. Les inventeurs ont encore su mettre en évidence que notamment le choix des deuxième et troisième mélanges élastomériques constituant les parties axialement extérieures et les parties intermédiaires de la deuxième couche conduit pour les propriétés recherchées à des formulations défavorables à la conductivité électrique.

Selon un mode de réalisation plus particulièrement avantageux de l'invention, le quatrième mélange constitutif de la partie centrale de la deuxième couche peut être identique au premier mélange de la première couche radialement la plus extérieure.

Selon un mode de réalisation préféré de l'invention, la largeur axiale de la partie centrale de la deuxième couche est inférieure à 10 % de la largeur axiale de ladite deuxième couche.

De préférence encore, la largeur axiale d'une partie intermédiaire est comprise entre 65 % et 95 % de la largeur axiale de ladite deuxième couche.

Enfin, la largeur axiale d'une partie axialement extérieure de la deuxième couche est supérieure à 5 % de la largeur axiale de ladite deuxième couche.

Avantageusement encore, le pneumatique comportant au moins deux sillons longitudinaux, le deuxième mélange élastomérique constituant les parties axialement extérieures de la deuxième couche n'est présent qu'axialement à l'extérieur des sillons.

Selon une variante avantageuse de l'invention, le rapport du volume de la première couche du premier mélange élastomérique sur la somme des volumes des première et deuxième couches de mélanges élastomériques est compris entre 20 et 85 % et avantageusement entre 50 et 85 %.

Une variante avantageuse de l'invention prévoit encore la présence d'une troisième couche, constituée d'au moins un cinquième mélange élastomérique radialement intérieure à la deuxième couche et au contact de celle-ci, ledit cinquième mélange élastomérique présentant une valeur maximale de tan(δ), noté tan(δ)max, strictement inférieure à 0.060.

La présence de cette troisième couche peut permettre de diminuer encore les montées en température de la bande de roulement lors de l'usage souhaité du pneumatique et donc favoriser les performances du pneumatique en termes d'endurance.

La présence de cette troisième couche peut encore permettre de diminuer la température de fonctionnement du pneumatique dans la zone du sommet pour permettre de baisser la résistance au roulement du pneumatique.

Selon un mode de réalisation plus particulièrement avantageux de l'invention, le cinquième mélange constitutif de la troisième couche peut être identique au deuxième mélange de la deuxième couche.

Plus particulièrement dans le cas de pneumatique dont la sculpture est constituée de ribs parallèles séparés par des sillons, la troisième couche de mélange élastomérique est avantageusement discontinue. Elle est préférentiellement alors au moins interrompue sous les rainures.

Selon ce dernier mode de réalisation, il est avantageusement possible d'effectuer un recreusage de la sculpture avant d'envisager un rechapage sans risque de voir apparaître en surface de la bande de roulement ladite troisième couche de mélange élastomérique.

Lorsque la deuxième couche comporte une partie centrale constituée d'un quatrième mélange élastomérique présentant une résistivité électrique volumique p telle que log(p) est inférieur à 6, la troisième couche est avantageusement également interrompue radialement sous la partie centrale de la deuxième couche par ledit quatrième mélange. Selon une telle réalisation de l'invention, la bande de roulement comporte ainsi, autour du plan équatorial, une zone de conductivité électrique depuis l'armature se sommet jusque la surface de la bande de roulement.

Avantageusement selon ce dernier mode de réalisation, le rapport du volume du cinquième mélange élastomérique sur la somme des volumes des trois couches de mélanges élastomériques est compris entre 5 et 15 %.

Selon l'invention, les mesures de volume précitées sont réalisées sur des pneumatiques à l'état neuf, n'ayant pas roulés et donc ne présentant aucune usure de la bande de roulement.

Selon un mode de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres modes de réalisation de l'invention, l'armature de sommet comporte encore au moins une couche d'éléments de renforcement circonférentiels.

Une réalisation de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

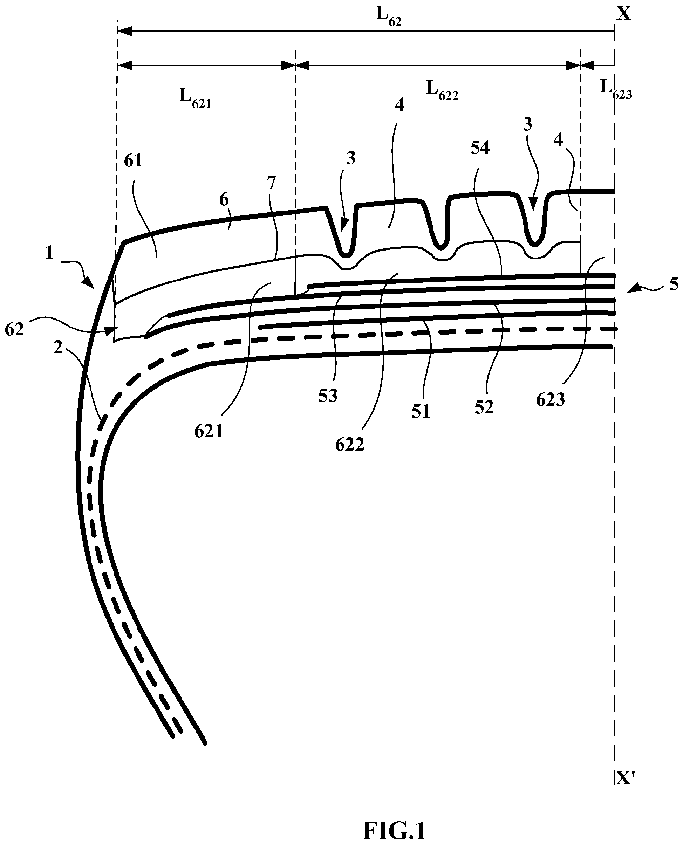

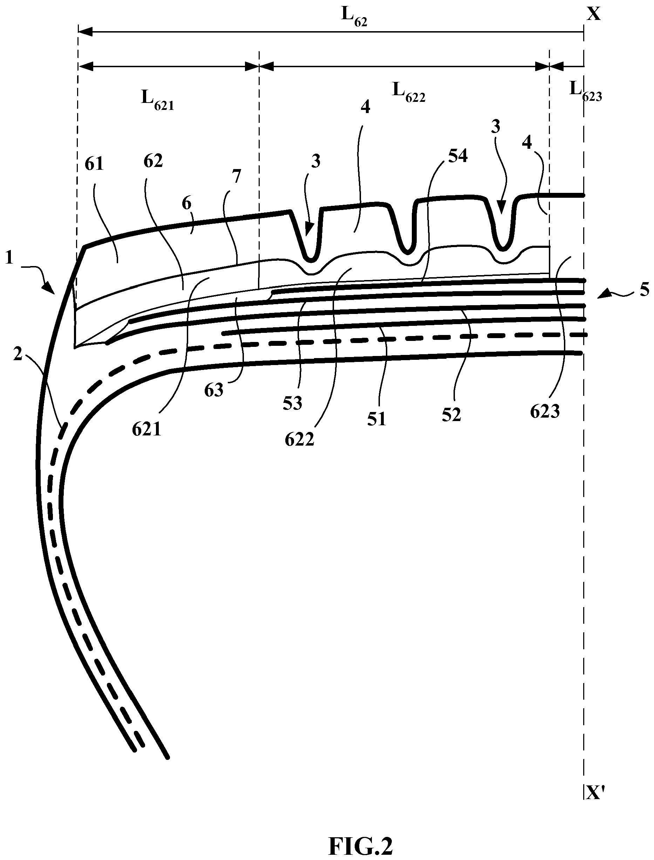

D'autres détails et caractéristiques avantageux de l'invention ressortiront ci-après de la description d'exemples de réalisation de l'invention en référence aux figures 1 et 2 qui représentent :
- figure1, une vue méridienne d'un schéma d'un pneumatique selon un premier mode de réalisation de l'invention,
- figure 2, une vue méridienne d'un schéma d'un pneumatique selon un deuxième mode de réalisation de l'invention.

Les figures ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

Sur la figure 1, le pneumatique 1, de dimension 315/70 R 22.5, comprend une armature de carcasse radiale 2 ancrée dans deux bourrelets, autour de tringles, non représentées sur les figures. L'armature de carcasse 2 est formée d'une seule couche de câbles métalliques. L'armature de carcasse 2 est frettée par une armature de sommet 5, elle-même coiffée d'une bande de roulement 6. La bande de roulement comporte des rainures 3 formant des ribs 4.

Les zones basses et bourrelets du pneumatique 1 ne sont notamment pas représentés sur les figures.

Sur la figure 1, l'armature de sommet 5 est formée radialement de l'intérieur à l'extérieur :
- d'une couche de triangulation 51 formée de câbles métalliques inextensibles 9.35 non frettés, continus sur toute la largeur de la nappe, orientés d'un angle égal à 65°,
- d'une première couche de travail 52 formée de câbles métalliques inextensibles 11.35 non frettés, continus sur toute la largeur de la nappe, orientés d'un angle égal à 18°,
- d'une seconde couche de travail 53 formée de câbles métalliques inextensibles 11.35 non frettés, continus sur toute la largeur de la nappe, orientés d'un angle égal à 18° et croisés aux câbles métalliques de la première couche de travail,
- d'une couche de protection 54 formée de câbles métalliques élastiques 6.35 non frettés, continus sur toute la largeur de la nappe, orientés d'un angle égal à 18° dans le même sens que les câbles métalliques de la couche de travail 53.

Conformément à l'invention, la bande de roulement 6 est constituée d'une première couche 61 radialement extérieure qui vient au contact du sol et d'une couche 62 radialement intérieure.

La couche 61 est constituée du premier mélange élastomérique présentant un module G* égal à 2 MPa.

La couche 62, radialement intérieure à la couche 61, est constituée de trois mélanges élastomériques.

Le deuxième mélange élastomérique formant les parties axialement extérieures 621 présentent une valeur maximale de tan(δ), noté tan(δ)max, égale à 0.045.

Le troisième mélange élastomérique formant les parties axialement intermédiaires 622 présentent un module G* égal à 1.65 MPa et une valeur maximale de tan(δ), noté tan(δ)max, égale à 0.080.

La partie centrale 623 de la couche 62 est constituée du premier mélange élastomérique et présente une résistivité électrique p telle que log(p) est égal à 3.

Le rapport du volume de la couche 61 du premier mélange élastomérique sur la somme des volumes des couches 61 et 62 est égal à 70 %.

La largeur axiale L₆₂₃ de la partie centrale 623 de la deuxième couche 62 est égale à 5 % de la largeur axiale L₆₂ de ladite deuxième couche.

La largeur axiale L₆₂₂ d'une partie intermédiaire 622 est égale à 75 % de la largeur axiale L₆₂ de ladite deuxième couche 62.

La largeur axiale L₆₂₁ d'une partie axialement extérieure 621 de la deuxième couche 62 est égale à 20 % de la largeur axiale L₆₂ de ladite deuxième couche 62.

La figure 2, conformément à une variante de réalisation de l'invention, représente un pneumatique 1 semblable à celui de la figure 1 et qui en diffère par la présence d'une troisième couche 63. Cette couche 63 est mise en place au contact de l'armature de sommet et radialement à l'intérieur de la couche 62. L'épaisseur de cette couche 63 positionnée notamment radialement sous les sillons pour est suffisamment peu importante pour permettre des étapes de recreusage avant d'envisager les étapes de rechapages afin de recréer des sculptures sans risque de faire apparaître la couche 63 en surface de la bande de roulement. La couche 63 est interrompue au niveau du plan équatorial par la présence du premier mélange pour créer une continuité selon la direction radiale avec la partie centrale 623 de la couche 62 depuis l'armature de sommet jusque la surface de la bande de roulement.

La couche 63 est constituée du deuxième mélange élastomérique et présente donc une valeur maximale de tan(δ), noté tan(δ)max, égale à 0.045.

Le rapport du volume de la couche 63 sur la somme des volumes des trois couches 61, 62 et 63 est égal à 10 %.

Trois pneumatiques ont été réalisés sur la base des trois mélanges élastomériques décrits ci-dessous avec certaines de leurs propriétés.

| | Mélange A | Mélange B | Mélange C |
|---|---|---|---|
| NR | 60 | 100 | 100 |
| BR | 40 | | |
| N234 | 54 | | |
| N683 | | | 35 |
| Silice 165 m2/G | | 50 | 10 |
| N330 / Agent de couplage | | 5/5 | 1/1 |
| Résine / Durcisseur | 0.25/0.3 | | |
| Anti Oxydant | 2 | 2.5 | 1 |
| Agent de mise en oeuvre | 3 | | |
| PARAFFINE | 1 | 1 | |
| ACIDE STEARIQUE | 1.5 | 2.5 | 1.5 |
| ZNO | 3 | 3 | 4.5 |
| SOUFRE | 1.1 | 1.5 | 1.5 |
| Accélérateur (CBS) | 1.1 | 1.8 | 1.4 |
| G*50%_{cc}/60°C/10Hz (MPa) | 2 | 1.65 | 1.4 |
| tan(δ)ₘₐₓ | 0.180 | 0.080 | 0.045 |
| Résistivité - log(p) | 3 | 10.4 | 10 |
| T95 à 150°C | 11 | 19.7 | 9 |

Le premier pneumatique est un pneumatique de référence R réalisé selon une configuration proche de la représentation de la figure 1 mais correspondant à des réalisations usuelles telles que décrites précédemment, la couche radialement intérieure étant formée d'un seul mélange élastomérique. Il associe un mélange A présent radialement à l'extérieur de la bande de roulement et un mélange C radialement intérieur. Le volume du mélange C est défini usuellement par l'homme du métier pour que la température de fonctionnement du pneumatique corresponde au roulage envisagé avec un tel pneumatique. Dans le cas présent, le volume du mélange C représente 15 % de la somme des volumes des mélanges A et C.

Un premier pneumatique T₁ conforme à l'invention et plus particulièrement au cas de la figure 1 associe, pour former la bande de roulement, le mélange A qui forme la partie radialement extérieure et donc la couche 61 ainsi que la partie centrale 623 de la couche radialement intérieure 62, le mélange B, qui forme les parties axialement intermédiaires 622 de la couche radialement intérieure 62 et le mélange C qui forme les parties axialement extérieures 621 de la couche radialement intérieure 62.

Le rapport du volume du mélange B sur la somme des volumes des mélanges A, B et C est égal à 17 %.

Le rapport du volume du mélange C sur la somme des volumes des trois mélanges A, B et C est égal à 13 %.

Le deuxième pneumatique T₂ réalisée conformément à l'invention s'apparente à celui de la figure 2. La bande de roulement du pneumatique T₂ est semblable à celle du pneumatique T₁ et comporte en outre une couche 63 constituée du mélange C et du mélange A autour du plan circonférentiel.

Le rapport du volume du mélange B sur la somme des volumes des mélanges A, B et C est égal à 12 %.

Le rapport du volume du mélange C sur la somme des volumes des trois mélanges A, B et C est égal à 18 %.

Pour effectuer une comparaison, des essais similaires sont effectués avec les trois pneumatiques.

Les premiers essais ont consisté à évaluer la distance parcourue par les pneumatiques avant d'effectuer un rechapage.

Les essais sont réalisés dans des conditions de charge et vitesse définis pour conduire à une usure et à des agressions de la bande de roulement du pneumatique de référence RI autorisant son rechapage après un kilométrage, auquel on attribue la valeur 100, parcouru dans lesdites conditions de ce test. La performance en usure est évaluée sur un véhicule poids lourd lors de roulages sur route ouverte sur des parcours représentatifs des usages classiquement observés sur des véhicules poids lourd. Des valeurs inférieures à 100 expriment une performance en usure inférieure.

Les résultats obtenus sont présentés dans le tableau suivant :

| | Pneumatique R1 | Pneumatique T1 | Pneumatique T2 |
|---|---|---|---|
| Usure | 100 | 99 | 98 |

Ces résultats montrent que les pneumatiques selon l'invention autorisent un roulage sensiblement équivalent au pneumatique de référence avant d'effectuer un rechapage.

Des mesures de résistance au roulement ont également été effectuées sur chacun des pneumatiques dans des conditions de roulage identiques. Les résultats des mesures sont présentés dans le tableau suivant ; elles sont exprimées en Kg/t, une valeur de 100 étant attribuée au pneumatique R. Des valeurs inférieures à 100 expriment une performance en résistance au roulement supérieure.

| Pneumatique R | Pneumatique T1 | Pneumatique T2 |
|---|---|---|
| 100 | 92 | 89 |

Ces valeurs mettent en évidence l'intérêt de l'utilisation du mélange B pour limiter la résistance au roulement du pneumatique.

La comparaison des pneumatiques T1 et T2 montrent que la présence d'une couche 63 peut présenter un intérêt non négligeable en termes de résistance au roulement tout en conservant des propriétés en usure et en agressions satisfaisantes.

En outre, la couche 63 présentant une faible épaisseur au moins sous les rainures, il est possible d'effectuer une étape de recreusage pour recréer des rainures avant d'envisager l'étape de rechapage. De ce point de vue, la présence de la couche de mélange 63 ne pénalise donc pas le pneumatique T2 en comparaison du pneumatique T1.

## Revendications

1. Pneumatique (1), à armature de carcasse radiale (2), comprenant une armature de sommet (5), elle-même coiffée radialement d'une bande de roulement (6) réunie à deux bourrelets par l'intermédiaire de deux flancs, ladite bande de roulement (6) étant constituée d'au moins deux couches (61, 62) de mélanges élastomériques radialement superposées, une première couche (61) formant la partie radialement extérieure de la bande de roulement étant constituée d'un premier mélange élastomérique et une deuxième couche (62) de mélanges élastomériques radialement intérieure et au contact de la dite première couche (61) de mélange élastomérique étant constituée d'au moins trois parties (621, 622), les parties axialement extérieures (621), de ladite deuxième couche (62), étant constituées d'un deuxième mélange élastomérique présentant une valeur maximale de tan(δ), noté tan(δ)max, strictement inférieure à 0.060, et au moins une partie (622), de ladite deuxième couche (62), axialement au contact d'au moins une partie axialement extérieure (621) étant constituée d'un troisième mélange présentant une valeur du module G* supérieur à 1.2 MPa et au moins 5 % inférieure à celle du premier mélange élastomérique et une valeur maximale de tan(δ), noté tan(δ)max, comprise entre 0.060 et 0.120, **caractérisé en ce que** le mélange élastomérique de ladite première couche (61) présente un module G* supérieur à 1.8 MPa.

2. Pneumatique (1) selon la revendications 1, **caractérisé en ce que** ladite deuxième couche (62) de mélange élastomérique est constituée d'au moins cinq parties (621, 622, 623), **en ce que** la partie centrale (623) est constituée d'un quatrième mélange élastomérique présentant une résistivité électrique volumique p telle que log(p) est inférieur à 6, **en ce que** les parties axialement extérieures (621), de ladite deuxième couche (62), sont constituées dudit deuxième mélange élastomérique, et **en ce que** au moins les parties intermédiaires (622), de ladite deuxième couche (62), axialement au contact de la partie centrale (623) et des parties axialement extérieures (621) sont constituées dudit troisième mélange.

3. Pneumatique (1) selon la revendication 2, **caractérisé en ce que** le premier mélange élastomérique et le quatrième mélange élastomérique sont identiques.

4. Pneumatique (1) selon l'une des revendications 1 à 3, **caractérisé en ce que** le rapport du volume de la première couche (61) de mélange élastomérique sur la somme des première et deuxième couches (61, 62) constitutives de la bande de roulement (6) est compris entre 50 et 85 %.

5. Pneumatique (1) selon l'une des revendications 1 à 4, **caractérisé en ce que** la largeur axiale de la partie centrale (623) de la deuxième couche (62) est inférieure à 10 % de la largeur axiale de ladite deuxième couche (62).

6. Pneumatique (1) selon l'une des revendications 1 à 5, **caractérisé en ce que** la largeur axiale d'une partie intermédiaire (622) est comprise entre 65 % et 95 % de la largeur axiale de ladite deuxième couche (62).

7. Pneumatique (1) selon l'une des revendications 1 à 6, **caractérisé en ce que** la largeur axiale d'une partie axialement extérieure (621) de la deuxième couche (62) est supérieure à 5 % de la largeur axiale de ladite deuxième couche (62).

8. Pneumatique (1) selon l'une des revendications précédentes, **caractérisé en ce que** ledit pneumatique comprend une troisième couche (63) constituée d'au moins un cinquième mélange élastomérique radialement intérieure à ladite deuxième couche (62) et au contact de celle-ci, et **en ce que** le cinquième mélange élastomérique présente une valeur maximale de tan(δ), noté tan(δ)max, strictement inférieure à 0.060.

9. Pneumatique (1) selon la revendication 8, **caractérisé en ce que** le rapport du volume du cinquième mélange élastomérique sur la somme des volumes des trois couches (61, 62, 63) de mélanges élastomériques est compris entre 5 et 15 %.

## Patentansprüche

1. Reifen (1) mit radialer Karkassenbewehrung (2), der eine Scheitelbewehrung (5) umfasst, die ihrerseits radial von einem Laufstreifen (6) überlagert wird, der über zwei Seitenwände mit zwei Wülsten verbunden ist, wobei der Laufstreifen (6) aus wenigstens zwei radial übereinanderliegenden Schichten (61, 62) aus Elastomermischungen besteht, wobei eine erste Schicht (61), die den radial äußeren Teil des Laufstreifens bildet, aus einer ersten Elastomermischung besteht und eine zweite Schicht (62) aus Elastomermischungen, die sich radial innerhalb und in Kontakt mit der ersten Schicht (61) aus Elastomermischung befindet, aus wenigstens drei Teilen (621, 622) besteht, wobei die axial äußeren Teile (621) der zweiten Schicht (62) aus einer zweiten Elastomermischung bestehen, die einen maximalen Wert von tan(δ), mit tan(δ)max bezeichnet, aufweist, der streng kleiner als 0,060 ist, und wenigstens ein Teil (622) der zweiten Schicht (62), der sich axial in Kontakt mit wenigstens einem axial äußeren Teil (621) befindet, aus einer dritten Mischung besteht, die einen Wert des Moduls G*, der größer als 1,2 MPa und um wenigstens 5 % kleiner als derjenige der ersten Elastomermischung ist, und einen maximalen Wert von tan(δ), mit tan(δ)max bezeichnet, der zwischen 0,060 und 0,120 liegt, aufweist, **dadurch gekennzeichnet, dass** die Elastomermischung der ersten Schicht (61) einen Modul G* aufweist, der größer als 1,8 MPa ist.

2. Reifen (1) nach Anspruch 1, **dadurch gekennzeichnet, dass** die zweite Schicht (62) aus Elastomermischung aus wenigstens fünf Teilen (621, 622, 623) besteht, dadurch, dass der mittlere Teil (623) aus einer vierten Elastomermischung besteht, die einen solchen spezifischen elektrischen Volumenwiderstand p aufweist, dass log(p) kleiner als 6 ist, dadurch, dass die axial äußeren Teile (621) der zweiten Schicht (62) aus der zweiten Elastomermischung bestehen, und dadurch, dass wenigstens die Zwischenteile (622) der zweiten Schicht (62), die sich axial in Kontakt mit dem mittleren Teil (623) und den axial äußeren Teilen (621) befinden, aus der dritten Mischung bestehen.

3. Reifen (1) nach Anspruch 2, **dadurch gekennzeichnet, dass** die erste Elastomermischung und die vierte Elastomermischung identisch sind.

4. Reifen (1) nach einem der Ansprüche 1 bis 3, **dadurch gekennzeichnet, dass** das Verhältnis des Volumens der ersten Schicht (61) aus Elastomermischung zur Summe der ersten und der zweiten Schicht (61, 62), aus denen der Laufstreifen (6) besteht, zwischen 50 und 85 % liegt.

5. Reifen (1) nach einem der Ansprüche 1 bis 4, **dadurch gekennzeichnet, dass** die axiale Breite des mittleren Teils (623) der zweiten Schicht (62) kleiner als 10 % der axialen Breite der zweiten Schicht (62) ist.

6. Reifen (1) nach einem der Ansprüche 1 bis 5, **dadurch gekennzeichnet, dass** die axiale Breite eines Zwischenteils (622) zwischen 65 % und 95 % der axialen Breite der zweiten Schicht (62) beträgt.

7. Reifen (1) nach einem der Ansprüche 1 bis 6, **dadurch gekennzeichnet, dass** die axiale Breite eines axial äußeren Teils (621) der zweiten Schicht (62) größer als 5 % der axialen Breite der zweiten Schicht (62) ist.

8. Reifen (1) nach einem der vorhergehenden Ansprüche, **dadurch gekennzeichnet, dass** der Reifen eine dritte Schicht (63) umfasst, die aus wenigstens einer fünften Elastomermischung besteht, die sich radial innerhalb der zweiten Schicht (62) und in Kontakt mit dieser befindet, und dadurch, dass die fünfte Elastomermischung einen maximalen Wert von tan(δ), mit tan(δ)max bezeichnet, aufweist, der streng kleiner als 0,060 ist.

9. Reifen (1) nach Anspruch 8, **dadurch gekennzeichnet, dass** das Verhältnis des Volumens der fünften Elastomermischung zur Summe der Volumina der drei Schichten (61, 62, 63) aus Elastomermischungen zwischen 5 und 15 % liegt.

## Claims

1. Tyre (1) with a radial carcass reinforcement (2), comprising a crown reinforcement (5), itself capped radially by a tread (6) connected to two beads by two sidewalls, the said tread (6) being made up of at least two radially superposed layers (61, 62) of elastomeric compounds, a first layer (61), forming the radially outer part of the tread, being constituted of a first elastomeric compound and a second layer (62) of elastomeric compounds radially on the inside of and in contact with the said first layer (61) of elastomeric compound being constituted of at least three parts (621, 622), the axially outer parts (621) of the said second layer (62) being constituted of a second elastomeric compound having a maximum value of tan (δ), denoted tan(δ)max, strictly less than 0.060, and at least a part (622) of the said second layer (62), axially in contact with at least an axially outer part (621) being constituted of a third compound having a value of the modulus G* greater than 1.2 MPa and at least 5% less than that of the first elastomeric compound and a maximum value of tan (δ), denoted tan (δ)max, of between 0.060 and 0.120 **characterized in that** the elastomeric compound of the said first layer (61) has a modulus G* greater than 1.8 MPa.

2. Tyre (1) according to Claim 1, **characterized in that** the said second layer (62) of elastomeric compound consists of at least five parts (621, 622, 623), **in that** the central part (623) consists of a fourth elastomeric compound having an electric resistivity per unit volume p such that log(p) is less than 6, **in that** the axially outer parts (621) of the said second layer (62) consist of the said second elastomeric compound, and **in that** at least the intermediate parts (622) of the said second layer (62) axially in contact with the central part (623) and axially outer parts (621) consist of the said third compound.

3. Tyre (1) according to Claim 2, **characterized in that** the first elastomeric compound and the fourth elastomeric compound are identical.

4. Tyre (1) according to one of Claims 1 to 3, **characterized in that** the ratio of the volume of the first layer (61) of elastomeric compound to the sum of the first and second layers (61, 62) that make up the tread (6) is between 50 and 85%.

5. Tyre (1) according to one of Claims 1 to 4, **characterized in that** the axial width of the central part (623) of the second layer (62) is less than 10% of the axial width of the said second layer (62).

6. Tyre (1) according to one of Claims 1 to 5, **characterized in that** the axial width of an intermediate part (622) is between 65% and 95% of the axial width of the said second layer (62).

7. Tyre (1) according to one of Claims 1 to 6, **characterized in that** the axial width of an axially outer part (621) of the second layer (62) is greater than 5% of the axial width of the said second layer (62).

8. Tyre (1) according to one of the preceding claims, **characterized in that** the said tyre comprises a third layer (63) consisting of at least a fifth elastomeric compound radially on the inside of the said second layer (62) and in contact therewith, and **in that** the fifth elastomeric compound has a maximum value of tan (δ), denoted tan (δ)max, strictly less than 0.060.

9. Tyre (1) according to Claim 8, **characterized in that** the ratio of the volume of the fifth elastomeric compound to the sum of the volumes of the three layers (61, 62, 63) of elastomeric compounds is between 5 and 15%.
